# EUROPEAN PATENT APPLICATION

(11) **EP 2 154 827 A1**
(43) Date of publication of application: **17.02.2010**
(21) Application number: 08305476.7
(22) Date of filing: 14.08.2008
(51) Int. Cl.: H04L 12/24

(54) **A self-recovering network element**

(71) Applicant: Alcatel Lucent, 75008 Paris (FR)
(72) Inventor: Ciavaglia, Laurent, 92120, Montrouge (FR); Martin, Jean-Stéphane, 91540, MENNECY (FR)
(74) Representative: Brose, Gerhard

(57) **Abstract**

The invention concerns a network element (100) comprising an addressable entity (131) being addressable by means of an interconnect technology, a forwarding element (130) configured to process packets, the forwarding element (130) implementing a protocol (120), a control element (110) configured to instruct the forwarding element (130) on how to process the packets, the control element (110) connected to the forwarding element (130) by means of the protocol (120), and a power supply (140) configured to supply energy to the forwarding element (130), wherein the control element (110) is connected to the power supply (140) and comprises a status monitor (111) for monitoring an operational state of the forwarding element (130) and a power interrupt (112) for interrupting the power supply (140) in response to a change of the operational state.

## Description

The invention relates to a network element according to the preamble of claim 1.

In computer networking, an addressable entity (AE) is an entity that is directly addressable given some interconnect technology. For example, on Internet Protocol (IP) networks, it is a device to which one can communicate using an IP address; on a switch fabric, it is a device to which one can communicate using a switch fabric port number.

A physical forwarding element (PFE) is an addressable entity that includes hardware used to provide per-packet processing and handling. This hardware may comprise network processors, application-specific integrated circuits (ASICs), or general-purpose processors, installed on line cards, daughter boards, mezzanine cards, or in stand-alone boxes. A physical forwarding element partition is a logical partition of a physical forwarding element consisting of some subset of each of the resources (e.g., ports, memory, forwarding table entries) available on the physical forwarding element.

A forwarding element (FE) is a physical forwarding element, physical forwarding element partition, or plurality of physical forwarding elements that provides per-packet processing and handling. A forwarding element is typically controlled by a control element (CE) instructing one or more forwarding elements on how to process packets. The control element handles functionality such as the execution of control and signaling protocols. Forwarding element and control element typically communicate by means such as the Forwarding and Control Element Separation (ForCES) protocol proposed in Request for Comments (RFC) 3746 of the Internet Engineering Task Force (IETF).

A downside of the ForCES framework is its lack of an effective and fully automatic recovery mechanism in case of a failure of the forwarding element. An object of the invention is thus to propose a network element with an integrated ability to recover if communication is disrupted. By a network element (NE) is meant an entity composed of one or more control elements and one or more forwarding elements. The proposed network element hides its internal organization from external entities and represents a single point of management to entities outside the network element.

This object is achieved by a network element according to the teaching of claim 1.

A main idea of the invention is to introduce into the control element functionality tor monitoring an operational state of the forwarding element and, if necessary, interrupting its power supply to reset the forwarding element to its initial state. This approach relieves the administrator of the duty to manually reset network elements on site in case of failure. It bears the additional advantage of reducing downtime of the forwarding element, hence disruption of the network traffic, to a bare minimum.

Further developments of the invention can be gathered from the dependent claims and the following description.

In the following the invention will be explained further making reference to the attached drawing.

A network element comprises an addressable entity being addressable by means of an interconnect technology for exchanging packets. By packet is meant a formatted block of data carried by a packet mode computer network such as, inter alia, Ethernet, IP, User Datagram Protocol (UDP), X.25, Frame relay, Asynchronous Transfer Mode (ATM), Multiprotocol Label Switching (MPLS), or TCP. The network element further comprises a forwarding element configured to process the packets, the forwarding element implementing a protocol such as the ForCES protocol, and a control element configured to instruct the forwarding element on how to process packets, the control element connected to the forwarding element by means of the protocol. In addition, the network element comprises a power supply configured to supply energy to the forwarding element.

To discover from disruptions of the packet exchange, the control element is connected to the power supply and comprises a status monitor for monitoring an operational state of the forwarding element as well as a power interrupt for interrupting the power supply in response to a change of the operational state.

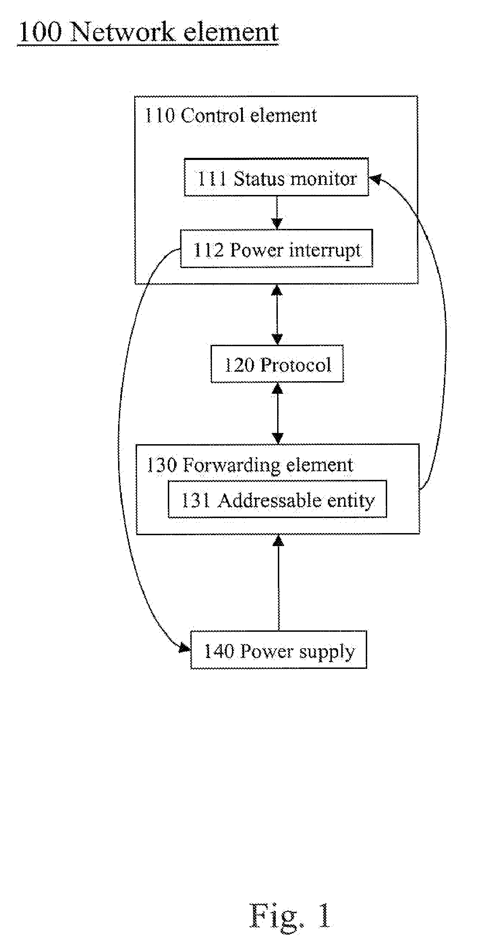

Fig. 1 schematically shows a network element according to an embodiment of the invention.

In the following, a method according to the invention is elucidated by way of example, referencing Fig. 1.

Fig. 1 shows a network element 100 comprising a control element 110, a protocol 120, a forwarding element 130, and a power supply 140. The control element 110 in turn comprises a status monitor 111 and a power interrupt 112, whereas the forwarding element 130 comprises an addressable entity 131. The control element 110 and the forwarding element 130 are mutually connected via the protocol 120. The forwarding element 130 is also connected to the power supply 140 and to the status monitor 111. Further, the power supply 140 is connected to the power interrupt 112.

In the example at hand, the network element 100 takes the form of a router, that is, a computer whose software and hardware are tailored to the tasks of routing and forwarding packets. The network element 100 contains a specialized operating system such as Cisco IOS, Juniper Networks JUNOS or JUNOSe, or Extreme Networks XOS, in addition to random access memory (RAM), non-volatile RAM (NVRAM), flash memory, and one or more processors.

Without departing from the spirit of the invention, an alternative embodiment may take the form of a firewall. In this context, by a firewall is meant a dedicated appliance or set of appliances configured to permit, deny, encrypt, or proxy all computer traffic between different security domains based upon a set of rules and other criteria.

Still another embodiment may take the form of a load balancer, that is, a device listening on the port or virtual data connection where external clients connect to access network services. The load balancer forwards requests to one of a plurality of backend servers, which usually replies to the load balancer. In consequence, the load balancer effectively spreads work between the backend servers as well as associated network links, central processing units (CPUs), hard drives, or other resources, in order to obtain optimal resource utilization, throughput, or response time.

To allow for the use of general-purpose hardware, the status monitor 111 and power interrupt 112 are implemented in software for execution by a general-purpose processor (not depicted) of the control element 110. More specifically, the status monitor 111 is implemented as a background process, i.e. a process, such as a daemon or service, without a user interface, to facilitate a continuous inspection of the forwarding element 130. By running in the background, the status monitor 111 does not interfere with the primary functions of the control element 110, specifically, the controlling of the forwarding element 130 by means of the protocol 120.

In the embodiment at hand, the forwarding element 130 is equipped with a network processor, that is, an integrated circuit which has a feature set specifically targeted at the networking application domain. The network processor is a software programmable device and possesses generic characteristics similar to general-purpose CPUs that are commonly used in many different types of equipment and products. In addition, the network processor's architecture is designed to enhance and optimize packet processing.

In an alternative embodiment, the forwarding element 130 is equipped with a general-purpose processor. In still another embodiment, the forwarding element 130 comprises an ASIC. By an ASIC is meant an integrated circuit (IC) customized for particular use in the forwarding element 130, rather than intended for general-purpose use.

The status monitor 111 is configured to receive an operational state of the forwarding element 130. In the given embodiment, the operational state is derived from a management information base (MIB, not depicted), that is, a database used to manage the devices in the communications network of the network element 100. one such MIB has been proposed as a standard by the IETF's Network Working Group in RFC 4293. To query the MIB for the information required, the status monitor makes use of the Simple Network Management Protocol (SNMP) as defined by the IETF in RFC 1157.

To allow for efficient counteraction in case of a disruption in network traffic caused by the forwarding element 130, the status monitor 111 in particular monitors the forwarding element 130 for failure or slippage. To flexibly respond to intermittent disruptions, the status monitor 111 stores a configurable time limit. If the disruption exceeds this duration, the status monitor will assume the forwarding element 130 to be inoperative and take counteraction.

Certain managed objects stored in the MIB may support the status monitor 111 in its task of identifying disruptions. In accordance with RFC 4293, the status monitor 111 queries the managed object "ifOperStatus" in regular intervals to obtain the current operational state of the interface. For example, the "down" or "test" states indicate that no operational packets can be passed.

Other managed objects that the status monitor 111 may consider include, in case the forwarding element 130 supports a variable bandwidth, "ifSpeed", giving an estimate of the interface's current bandwidth in bits per second. Further, the "ifOutQLen" object indicates the length of the output packet queue in packets, a rapid increase of which might warrant action. Finally, various objects give an indication of the number of packets or bytes processed by the forwarding element. For any or all of these values, an embodiment may allow the administrator to configure thresholds or limits to define an acceptable range for the respective measure.

If the status monitor 111 detects a relevant change of the operational state according to any of the indications outlined above, it triggers the power interrupt 112 to interrupt the power supply 140 that normally supplies the forwarding element 130 with energy, inevitably causing the forwarding element 130 to shut down. To inform the routing protocols of the underlying network of this event, the control element 110 typically prompts a reachability and shortest path first (SPF) recalculation and associated downloading of new Forwarding Information Bases (FIBs) from the control element 110 to any other associated forwarding elements. Such recalculation and FIB updates will also be propagated from the control element 110 to any neighbors of the network element 100 affected by the connectivity of the forwarding element 130.

By interrupting the power supply 140, the power interrupt 112 effectively causes the forwarding element 130 to purge its volatile memory and revert to its initial inactive state. As a consequence, any processes or other memory contents that might negatively impact functionality or performance of the forwarding element 130 will eventually be deleted. As soon as power is restored, the forwarding element 130 will automatically initiate its bootstrap sequence, causing it to load the operating instructions that will restore normal operation. Again, duration of the power interruption may be configured by the administrator to meet the reset requirements of the forwarding element 130 while keeping system downtime to a minimum.

When the bootstrap sequence is completed, the forwarding element 130 automatically rediscovers its master, i.e. the control element 110. This can be achieved by several means. In the given embodiment, the forwarding element 130 reenters the pre-association phase, i.e. re-determines the control element together with which it forms the network element 100. In alternative embodiment, the forwarding element 130 may retrieve the control element information from a cache memory of the forwarding element 130 and attempt to validate this information.

Once the forwarding element 130 discovers the control element 110, it starts message exchange with the control element 110 to reestablish the association, with the possible exception that it might be able to bypass the transport of the complete initial configuration. For instance, the forwarding element 130 may decide to retrain its routing table and other state information from the last association. Instead of resending this information, the forwarding element 130 may be able to use a more efficient mechanism to resynchronize its state with the control element 110, if such a mechanism is supported by the protocol 120. For example, a comparison of the checksums of the information stored in the control element 110 and the forwarding element 130 indicate whether a complete retransmission of the information is indeed necessary or can be avoided.

A specific case occurs where the forwarding element 130 is equipped with an uninterruptible power supply (UPS), sometimes labeled continuous power supply (CPS) or battery backup. A UPS is a device which maintains a continuous supply of electric power to the connected forwarding element 130 by supplying power from a separate source when utility power is not available. It differs from an auxiliary power supply or standby generator, which does not provide instant protection from a momentary power interruption. Integrated systems that have UPS and standby generator components are often referred to as emergency power systems.

In the case of a UPS comprising a primary and secondary or backup power supply, the power interrupt may involve a switch-over to the backup power supply. Here, for the reset to be completed, the power interrupt 112 must ensure for a sufficient time lag between the deactivation of the primary supply and the activation of its backup. When used to power the forwarding element 130, the UPS may take the form of an Alarm Power Supply Unit (APSU) that supports an IP stack and explicitly supports the ability to reboot the attached forwarding element 130. In this case, the power interrupt 112 simply needs to trigger the APSU's built-in reboot functionality by means of IP, for example, according to SNMP if supported by the APSU at hand.

A further embodiment of the invention may take the form of an external module suitable for interfacing with the network element 100 or, more specifically, the control element 110. Suitable interfaces may include an Ethernet network interface card (NIC) according to IEEE 802.3, connected to the external module by means of an 8 Positron 8 Contact (8P8C) modular plug and socket, often incorrectly referred to as an RJ45 connector. The suggested configuration offers the possibility to apply a method according to the invention while making use of a conventional network element. In this case, any modification, such as a firmware or operating system update, of the network element 100 is effectively avoided as the external module adds the functionalities of the status monitor 111 and power interrupt 112 to the existing configuration. Due to the module's network connectivity, the power interrupt 112, should the need arise, may interact with the forwarding element 130 by means of the SNMP protocol.

To merge the power interrupt 112 with the power supply 140 of the forwarding element 130, an external module according to an embodiment of the invention may further be integrated or coupled with a controllable power supply. By connecting the forwarding element 130 to an electrical outlet through its integral power supply, the external module thus effectively assumes control over the forwarding element 130, allowing the power interrupt 112 to suspend the current flow as necessary.

## Claims

1. A network element (100) comprising
an addressable entity (131) being addressable by means of an interconnect technology,
a forwarding element (130) configured to process packets, the forwarding element (130) implementing a protocol (120),
a control element (110) configured to instruct the forwarding element (130) on how to process the packets, the control element (110) connected to the forwarding element (130) by means of the protocol (120), and
a power supply (140) configured to supply energy to the forwarding element (130),
**characterized in that,** in order to recover from a disruption of the packet exchange, the control element (110) is connected to the power supply (140) and comprises
a status monitor (111) for monitoring an operational state of the forwarding element (130) and
a power interrupt (112) for interrupting the power supply (140) in response to a change of the operational state.

2. A network element (100) according to claim 1, **characterized in that** the change of the operational state is either of the following:
a failure of the forwarding element (130) and
an intermittent disruption of the packet exchange, the disruption exceeding a configured duration.

3. A network element (100) according to claim 1, **characterized in that** the network element (100) further comprises a management information, base, wherein the control element (110) is configured to access the management information base in order to detect the change of the operational state.

4. A network element (100) according to claim 3, **characterized in that** the management information base comprises at least one of the following:
an estimate of a current bandwidth of the forwarding element (130),
a current operational state of the forwarding element (130),
a measure of the packets processed by the forwarding element (130), and
a length of a queue of packets remaining to be processed by the forwarding element (130).

5. A network element (100) according to claim 1, **characterized in that** the power interrupt (112) is configured to interrupt the power supply (140) by suspending the power supply (140) for a configured time interval.

6. A network element (100) according to claim 1, **characterized in that** the network element (100) further comprises a backup power supply (140), wherein the power interrupt (112) is configured to deactivate the power supply (140), wait for a configured time interval, and activate the backup power supply (140).

7. A network element (100) according to claim 6, **characterized in that** the power supply (140) and the backup power supply (140) constitute an uninterruptable power supply (140).

8. A network element (100) according to claim 1, **characterized in that** the network element (100) comprises at least one of the following:
a router,
a firewall, and
a load balancer.

9. A network element (100) according to claim 1, **characterized in that** the forwarding element (130) comprises at least one of the following:
a network processor,
an application-specific integrated circuit, and
a general-purpose processor.

10. A network element (100) according to claim 1, **characterized in that** the control element (110) comprises a general-purpose processor.
